# EUROPÄISCHE PATENTSCHRIFT

(11) **EP 2 211 066 B1**
(45) Veröffentlichungstag und Bekanntmachung des Hinweises auf die Patenterteilung: **11.07.2012**
(21) Anmeldenummer: 10000380.5
(22) Anmeldetag: 16.01.2010
(51) Int. Cl.: F16C 23/08, F16C 33/48, F16C 43/08, F16C 33/49

(54) **Pendelrollenlager mit Rollen und Verfahren zum Einbau der Rollen in das Pendelrollenlager**
Spherical roller bearing with rollers and method for installing the rollers in the spherical roller bearing
Roulement à rotule doté de rotules et procédé d'installation des rotules dans le roulement à rotule

(30) Priorität: 21.01.2009 DE 102009005389
(43) Veröffentlichungstag der Anmeldung: 28.07.2010
(73) Patentinhaber: Schaeffler Technologies AG & Co. KG, 91074 Herzogenaurach (DE)
(72) Erfinder: Stützlein, Markus, 97209 Veitshöchheim (DE)

(56) Entgegenhaltungen:
- EP-A1- 1 816 362
- WO-A1-2004/027277
- AT-B- 191 683
- JP-A- 2001 208 075
- JP-A- 2001 304 271
- JP-A- 2005 061 594
- JP-A- 2007 332 996
- US-A- 1 689 505

## Beschreibung

### Gebiet der Erfindung

Die Erfindung betrifft ein Pendelrollenlager mit einem Außenring, mit einem Innenring, mit einer Mehrzahl von Rollen, welche mindestens in zwei Reihen zwischen dem Innenring und dem Außenring abwälzend angeordnet sind, so dass der Außenring und der Innenring zueinander um eine Drehachse drehbar gelagert sind, und mit einem Massivkäfig, wobei der Massivkäfig einen Mittelring aufweist, an den beidseitig axial gerichtete Stege angeordnet sind, die Aufnahmeabschnitte für die Rollen bilden, wobei der Mittelring Schwächungsbereiche aufweist. Die Erfindung betrifft auch ein Verfahren zum Einbau der Rollen in das Pendelrollenlager.

Pendelrollenlager sind Wälzlager, deren Wälzkörper eine tonnenartige Form aufweisen. Derartige Pendelrollenlager werden eingesetzt, wenn neben reinen radialen Belastungen auch axiale Belastungen durch das Wälzlager aufzunehmen sind. Zudem erlauben Pendelrollenlager eine Verkippung von Außenring und Innenring um wenige Grad. Zur Führung der Rollen werden Käfige eingesetzt, wobei je nach Anwendungsgebiet Blechkäfige oder Massivkäfige eingesetzt werden.

Die Offenlegungsschrift DE 10 2004 043 374 A1 betrifft einen Massivkäfig für ein Rollenlager, insbesondere für ein zweireihiges Pendelrollenlager, wobei der Massivkäfig als ein sogenannter Kammkäfig ausgebildet ist. Dieser Kammkäfig weist axial ausgerichtete Stege auf, zwischen denen die Rollen angeordnet sind.

Die Druckschrift DE 198 17 192 B4 betrifft ebenfalls ein Pendelrollenlager, wobei bei der Ausführung gemäß der Figur 17 ein Kammkäfig eingesetzt wird, welcher außenringgeführt ist. In der Kontaktzone zwischen Außenring und Käfig weist der Käfig eine radial außenliegende, umlaufende Nut auf, welche strömungstechnisch mit einer Nut in bzw. Durchgangsbohrungen durch den Außenring verbunden ist, so dass Schmierstoff vom Außenring in die Nut des Käfigs eingebracht werden kann.

Der Erfindung liegt die Aufgabe zugrunde, ein Pendelrollenlager bzw. ein Verfahren vorzuschlagen, welche eine einfache Montage des Pendelrollenlagers ermöglichen.

Diese Aufgabe wird durch ein Pendelrollenlager mit den Merkmalen des Anspruchs 1 sowie durch ein Verfahren mit den Merkmalen des Anspruchs 14 gelöst. Bevorzugte oder vorteilhafte Ausführungsformen der Erfindung ergeben sich aus den Unteransprüchen, der nachfolgenden Beschreibung sowie den beigefügten Figuren.

Als Erfindung wird ein Pendelrollenlager mit einem Außenring, mit einem Innenring und mit einer Mehrzahl von Rollen offenbart, wobei die Rollen in mindestens zwei Reihen zwischen dem Innenring und dem Außenring abwälzend angeordnet sind. Außenring und Innenring werden nachfolgend auch beide als Ring bezeichnet.

Die Rollen sind vorzugsweise tonnen- und/oder fassförmig, wahlweise symmetrisch oder asymmetrisch, ausgebildet, wobei der Durchmesser ausgehend von dem freien Ende der jeweiligen Rolle zur Mitte oder zum Innenbereich der Rolle hin bis zu einem Maximaldurchmesser zunimmt. Die Laufbahn des Außenrings ist vorzugsweise im Querschnitt kreisabschnittsförmig ausgebildet, so dass der Innenring sich über die Rollen um vorzugsweise bis zu 2°, insbesondere bis zu 4° gegenüber dem Außenring verschwenken kann. Der Innenring ist vorzugsweise einstückig ausgebildet, der Außenring kann einstückig oder auch zwei- bzw. mehrteilig ausgebildet sein, wobei dann bevorzugt jeder Reihe der Rollen ein Teil des Außenrings zugeordnet ist. Außenring und Innenring sind relativ zueinander in einer Normalstellung um eine gemeinsame Drehachse drehbar gelagert. Insbesondere ist das Pendelrollenlager als ein Radialwälzlager realisiert.

Zur Führung der Rollen weist das Pendelrollenlager einen Massivkäfig auf, welcher einen Mittelring umfasst, an den beidseitig axial gerichtete Stege angeordnet sind, die Aufnahmeabschnitte für die Rollen bilden. Der Massivkäfig ist aus einem Massivhalbzeug z.B. durch spanabhebende Verfahren gefertigt. Die axial ausgerichteten Stege sind vorzugsweise exakt radial ausgerichtet, bei abgewandelten Ausführungsformen können diese jedoch auch gewinkelt angeordnet sein. Zwischen jeweils zwei Stegen auf einer Seite des Mittelrings wird ein Aufnahmeabschnitt für eine der Rollen gebildet.

Im Rahmen der Erfindung wird vorgeschlagen, dass der Mittelring derart ausgestaltete Schwächungsbereiche aufweist, so dass bei einem Einbau der Rollen ein elastisches Nachgeben, insbesondere ein elastisches Verschieben oder Verschwenken der Stege ermöglicht und/oder unterstützt wird.

Insbesondere erfolgt das elastische Nachgeben der Stege durch eine elastische Verformung, z. B. eine Verwindung des Mittelrings, welche erst durch die Schwächungsbereiche ermöglicht wird, wobei die Stege unverformt verbleiben.

Durch die erfindungsgemäße Ausgestaltung des Massivkäfigs wird eine verbesserte Möglichkeit zur Montage der Rollen in den Massivkäfig vorgeschlagen. Während bei den bisher bekannten Verfahren aufgrund der Starre des Massivkäfigs beim Einsetzen der Rollen, insbesondere beim Einsetzen einer der letzten Rollen, Beschädigungen an den Rollen bzw. an dem Innenring oder dem Massivkäfig auftreten konnten, wird durch ein elastisches Nachgeben des Mittelrings die Montage deutlich vereinfacht. Dadurch, dass die Schwächungsbereiche nicht an den Stegen angebracht werden, wird erreicht, dass die Belastungsfähigkeit des Massivkäfigs weitgehend unverändert bleibt.

Erfindungsgemäß sind die Schwächungsbereiche als eine umlaufende Nut ausgebildet, wobei die umlaufende Nut an der radialen Außenseite und an der radialen Innenseite des Massivkäfigs eingebracht sind. Derartige Schwächungsbereiche sind fertigungstechnisch einfach in den Mittelring einzubringen. Die Nut kann in einem Querschnitt senkrecht zu der Umlaufrichtung beispielsweise einen rechteckigen oder auch einen halbrunden Querschnitt aufweisen. Vorzugsweise ist das Schachtverhältnis der Nut, welches als das Verhältnis der Tiefe der Nut an der tiefsten Stelle zu der Breite der Nut am Ausgang definiert ist, größer als 1, vorzugsweise größer als 3 und insbesondere größer als 5.

Zusätzlich können Schwächungsbereiche als in Umlaufrichtung abschnittsweise ausgebildete Querschnittreduzierungen des Mittelrings realisiert werden. Vorzugsweise sind die Querschnittreduzierungen durch abtragende, insbesondere spanabhebende Fertigungsverfahren in den Mittelring eingebracht. Insbesondere bei Kunststoffkäfigen können die Schwächungsbereiche auch beim Urformvorgang, insbesondere beim Gießen oder Spritzen, eingebracht werden.

Bei einer bevorzugten Ausprägung der Erfindung ist vorgesehen, dass die Schwächungsbereiche beabstandet von dem benachbarten und/oder nächstliegenden Ring angeordnet ist. So kann beispielsweise vorgesehen sein, dass zwischen Innenring und radial innerer Nut des Mittelrings und/oder zwischen Außenring und der radial außenliegender Nut des Mittelrings ein Spalt vorliegt, welcher z.B. mindestens 10%, vorzugsweise mindestens 20% und insbesondere mindestens 30% des Maximaldurchmessers einer der Rollen ausmacht.

Alternativ oder ergänzend kann einer der Schwächungsbereich, insbesondere eine der Nuten, an einen in Umlaufrichtung geschlossenen Bereich des benachbarten und/oder nächstliegenden Rings angrenzen. Dadurch, dass die Nut gegenüberliegend zu einem geschlossenen Bereich des Rings ist, wird nochmals unterstrichen, dass die Nuten bevorzugt als Schwächungsbereiche und nicht als Hilfsmittel für die Schmierstoffverteilung genutzt werden.

Bei einer möglichen Ausführungsform der Erfindung weist der Mittelring axial ausgerichtete Durchlässe, insbesondere Bohrungen, als Schwächungsbereiche auf. Derartige Durchlässe bilden Querschnittsreduzierungen des Mittelrings in Umlaufrichtung, die in der Umlaufrichtung nur abschnittsweise ausgebildet sind.

Für eine hohe Stabilität ist es bevorzugt, dass der Massivkäfig, insbesondere der Mittelring und die Stege, einstückig ausgebildet sind. Beispielsweise ist der Massivkäfig aus einem massiven Halbzeug spanabhebend oder weitgehend spanabhebend gefertigt. Das Halbzeug kann beispielsweise aus einem Stahl- oder Messingmaterial bestehen.

Bei einer möglichen konstruktiven Realisierung der Erfindung sind die Aufnahmeabschnitte und/oder die Stege auf den beiden Seiten des Mittelrings in Umlaufrichtung versetzt zueinander angeordnet. Die Stege bilden somit beidseitig Kammkäfige, die in Umlaufrichtung zueinander verdreht sind.

Es ist besonders bevorzugt, wenn der Massivkäfig wälzkörpergeführt oder innenringgeführt ist. Diese Arten der Führung haben sich gerade bei Lagern mit hohen Tragzahlen oder bei starken Belastungen bewährt. Aus einer ähnlichen Überlegung heraus ist es bevorzugt, dass das Pendelrollenlager einen Mittelbord aufweist, welcher zwischen den zwei Reihen der Rollen angeordnet ist und welcher als separates Bauteil zu den Ringen und zu dem Massivkäfig oder als Anformung an dem Innenring realisiert ist.

Besonders stark treten die Vorteile der Erfindung hervor, wenn der Innenring beidseitig einen in Umlaufrichtung durchgängigen Außenbord aufweist. Insbesondere kann bei der erfinderischen Ausgestaltung auf eine Einfüllnut an den Außenborden verzichtet werden, da das Einsetzen der Rollen durch eine elastische Verformung des Massivkäfigs ermöglicht wird.

Vorzugsweise ist das Pendelrollenlager als ein Großlager mit einem Außendurchmesser von mehr als 300 mm, vorzugsweise mit mehr als 500 mm und insbesondere mit mehr als 1000 mm ausgebildet. Bei dieser Größenordnung bietet sich der Einsatz der Massivkäfige an, da diese zum einen stabiler und zum anderen gerade in kleineren Stückzahl kostengünstiger zu fertigen sind.

Ein weiterer Gegenstand der Erfindung betrifft ein Verfahren zum Einbau der Rollen in das Pendelrollenlager nach einem der vorhergehenden Ansprüche, wobei in einem Schritt der Massivkäfig auf den Innenring gesetzt wird und in einem späteren Schritt die Rollen in die Aufnahmeabschnitte eingesetzt werden, wobei während des Einsetzens der Rollen der Mittelring elastisch verformt wird. Vorzugsweise ist das Pendelrollenlager so ausgebildet, dass eine Verformung des Mittelrings zum Einbau der Rollen zwingend notwendig ist.

Weitere Merkmale, Vorteile und Wirkungen der Erfindung ergeben sich aus der nachfolgenden Beschreibung bevorzugter Ausführungsbeispiele der Erfindung sowie den beigefügten Figuren. Dabei zeigen:
- Figur 1: eine schematische dreidimensionale Teildarstellung eines Massivkäfigs für ein Pendelrollenlager als ein Ausführungsbeispiel der Erfindung;
- Figur 2: in einer ähnlichen Darstellung eine nicht erfindungsgemäße Variation des Massivkäfigs der Figur 1.

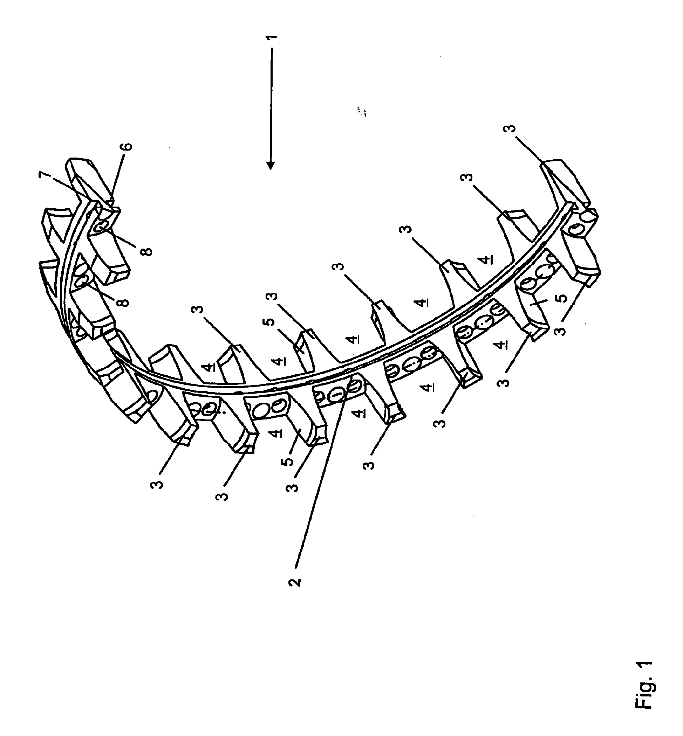

Die Figur 1 zeigt einen Abschnitt eines Massivkäfigs 1 für ein Pendelrollenlager in einer schematischen dreidimensionalen Darstellung als ein erstes Ausführungsbeispiel der Erfindung.

Der Massivkäfig 1 ist einstückig durch ein spanabhebendes Verfahren aus einem Vollmaterialhalbzeug aus Messing oder Stahl hergestellt worden. Der Außendurchmesser des dargestellten Massivkäfigs 1 beträgt mindestens 280 mm, vorzugsweise mindestens 480 mm und insbesondere mindestens 980 mm. Er weist einen Mittelring 2 sowie eine Mehrzahl von in axialer Richtung des Pendelrollenlagers seitlich auskragender Stege 3 auf. Zwischen den Stegen 3 sind Aufnahmeabschnitte 4 für die Rollen bereitgestellt. Die Aufnahmeabschnitte 4 werden beispielsweise durch ein Bohrverfahren gebildet, wobei die Bohrrichtung ebenfalls axial ggfs. unter einem Winkel ausgerichtet ist.

An der den Aufnahmeabschnitten 4 zugewandten Seite weisen die Stege 3 Führungsflächen 5 für die nicht dargestellten Rollen auf, welche angepasst zu den tonnenförmigen Rollen gekrümmt ausgebildet sind. Die Stege 3 auf der linken Seite zu dem Mittelring 2 und die Stege 3 auf der rechten Seite zu dem Mittelring 2 sind jeweils einer Reihe von Rollen zugeordnet.

Die Länge der Stege 3 ist kleiner als die axiale Länge der Rollen ausgebildet. Die Stege 3 sind frei auslaufend realisiert, so dass sich beidseitig zu dem Mittelring 2 ein Kammkäfig für die Rollen ergibt.

Der Mittelring 2 ist im Querschnitt senkrecht zu der Umlaufrichtung in der Grobform rechteckig oder trapezförmig ausgebildet. Er dient als Träger für die Stege 3. Die Dicke des Mittelrings 2 in radialer Richtung entspricht in etwa der Dicke der Stege 3 in gleicher Richtung, so dass der Massivkäfig 1 entweder wälzkörpergeführt oder der Innenring entsprechende Mittelborde, vorzugsweise massive Borde, aufweist, so dass der Massivkäfig 1 innenringgeführt wird.

Bei einem Zusammenbau des Pendelrollenlagers wird zunächst der Massivkäfig 1 auf einen Innenring, welcher bevorzugt zwei Außenborde und einen aufgesetzten oder einstückig angeformten Mittelbord, der im montierten Zustand zwischen den zwei Reihen Rollen angeordnet ist, eingesetzt. In einem nächsten Schritt werden die Aufnahmeabschnitte 4 mit den Rollen bestückt.

Aufgrund der geometrischen Gegebenheiten ist es ohne weitere Maßnahmen nicht möglich, die Rollen beschädigungsfrei oder -arm in die Aufnahmeabschnitte 4 einzuführen, da der Einführbereich durch die Stege 3 und die Außenborde des Innenrings geometrisch so verkleinert ist, dass die tonnen- und/oder fassförmigen Rollen nicht hindurch passen. Die Problematik ergibt sich insbesondere daraus, dass die Rollen in einem Mittelabschnitt einen größeren Querschnitt und/oder Durchmesser aufweisen als an ihren freien Enden. Auch möglich ist der Einsatz von asymmetrischen Rollen, insbesondere asymmetrische Tonnenrollen.

Um ein Einführen der Rollen zu ermöglichen, muss - zumindest bei den Rollen, die zuletzt eingesetzt werden - der Massivkäfig 1 kurzzeitig elastisch verformt werden. Um die elastische Verformung zu erleichtern oder erst zu ermöglichen, weist der Mittelring 2 verschiedene Schwächungsbereiche auf, die es erlauben, dass sich der Mittelring 2 beim Einführen der Rollen elastisch verformt. Insbesondere ist der Massivkäfig 1 so ausgelegt, dass die Verformung zum größten Teil durch den Mittelring 2 und zu einem geringeren Teil durch die Stege 3 aufgebracht wird.

In der Figur 1 sind als Schwächungsbereiche eine radial innere Nut 6 und eine radial äußere Nut 7, jeweils mit einem rechteckigen Querschnitt eingebracht, welche beide in Umlaufrichtung durchgehend ausgebildet sind. Die Breite der Nuten 6, 7 entspricht in etwa 30% der Breite des Mittelrings 2 an der radialen Innen- bzw. Außenseite. Die Tiefen der Nuten 6 und 7 sind so gewählt, dass mindestens 50%, insbesondere mindestens 70% der Gesamtdicke des Mittelrings 2 durch die Nuten 6, 7 geöffnet sind. Anders ausgedrückt ist die radiale Ausdehnung des Zwischenstegs zwischen den Nuten 6 und 7 kleiner als 50%, insbesondere kleiner als 30% der Gesamtdicke des Mittelrings 2.

Als weitere Schwächungsbereiche zeigt der Massivkäfig 1 axiale Durchbrüche 8, welche jeweils schräg gegenüberliegende Aufnahmeabschnitte 4 miteinander verbinden. Auch die Durchbrüche 8 in Form von Bohrungen erhöhen die Elastizität des Massivkäfigs 1. Die Schwächungsbereiche 6, 7, 8 können zudem als Schmierstoffresenroire genutzt werden.

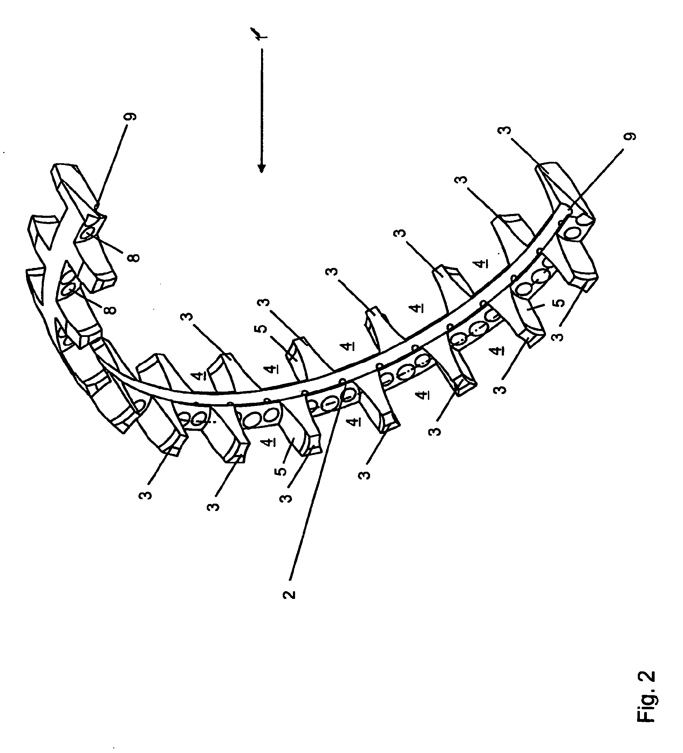

Die Figur 2 zeigt einen nicht erfindungsgemäßen Massivkäfig 1', wobei statt den Nuten 6, 7 mit rechteckigem Querschnitt eine Nut 9 an der radialen Innenseite des Massivkäfigs 1' mit einem halbrunden oder radienförmigen Querschnitt eingebracht ist. Analog wie in der Figur 1 sind axiale Durchbrüche 8 in den Mittelring 2 eingebracht. Auch bei der Form gemäß der Figur 2 können optional ergänzend an der radialen Außenseite eine weitere Nut vorgesehen sein.

Bei weiteren Ausführungsformen ist es möglich, die Schwächungsbereiche 6, 7, 8 beliebig zu kombinieren, so dass beispielsweise ein Massivkäfig gebildet wird, der nur eine innere und äußere Nut 6, 7 aufweist.

### Bezugszeichenliste

- 1: Massivkäfig
- 2: Mittelring
- 3: Stege
- 4: Aufnahmeabschnitt
- 5: Führungsflächen
- 6: innere Nut
- 7: äußere Nut
- 8: Durchbrüche
- 9: Nut

## Patentansprüche

1. Pendelrollenlager
mit einem Außenring,
mit einem Innenring,
mit einer Mehrzahl von Rollen, welche in mindestens zwei Reihen zwischen dem Innenring und dem Außenring abwälzend angeordnet sind, so dass der Außenring und der Innenring zueinander um eine Drehachse drehbar gelagert sind,
und mit einem Massivkäfig (1), wobei der Massivkäfig (1) einen Mittelring (2) aufweist, an den beidseitig axial gerichtete Stege (3) angeordnet sind, die Aufnahmeabschnitte (4) für die Rollen bilden,
wobei der Mittelring (2) Schwächungsbereiche (6, 7, 8, 9) aufweist,
**dadurch gekennzeichnet, dass** die Schwächungsbereiche (6, 7, 9) ausgebildet sind, bei einem Einbau der Rollen ein elastisches Nachgeben der Stege (3) zu ermöglichen und/oder zu unterstützen
wobei die Schwächungsbereiche als umlaufende Nuten (6, 7, 9) ausgebildet sind, welche an der radialen Außenseite und an der radialen Innenseite des Mittelrings (2) des Massivkäfigs (1) eingebracht sind.

2. Pendelrollenlager nach anspruch 1, **dadurch gekennzeichnet, dass** zusätzlich Schwächungsbereiche (8) als in Umlaufrichtung abschnittsweise verhandene Querschnittreduzierungen am Mittelring (2) ausgebildet sind.

3. Pendelrollenlager nach einem der vorhergehenden Ansprüche, **dadurch gekennzeichnet, dass** die Nut (6, 7, 9) einen rechteckigen oder einen halbrunden Querschnitt aufweist.

4. Pendelrollenlager nach einem der vorhergehenden Ansprüche, **dadurch gekennzeichnet, dass** mindestens ein Schwächungsbereich, insbesondere die Nut (6, 7, 9), beabstandet von dem benachbarten Ring, insbesondere Außenring, angeordnet ist.

5. Pendelrollenlager nach einem der vorhergehenden Ansprüche, **dadurch gekennzeichnet, dass** mindestens ein Schwächungsbereich (6, 7, 8, 9), insbesondere eine Nut (6, 7, 9), an einen in Umlaufrichtung geschlossen Bereich des Rings angrenzt.

6. Pendelrollenlager nach einem der vorhergehenden Ansprüche, **dadurch gekennzeichnet, dass** der Mittelring (2) axial ausgerichtete Durchlässe (8), insbesondere Bohrungen als zusätzliche Schwächungsbereiche aufweist.

7. Pendelrollenlager nach einem der vorhergehenden Ansprüche, **dadurch gekennzeichnet, dass** der Massivkäfig (1) einstückig ausgebildet ist.

8. Pendelrollenlager nach einem der vorhergehenden Ansprüche, **dadurch gekennzeichnet, dass** die Aufnahmeabschnitte (4) und/oder die Stege (3) auf den beiden Seiten des Mittelrings (2) in Umlaufrichtung versetzt zueinander angeordnet sind.

9. Pendelrollenlagern nach einem der vorhergehenden Ansprüche, **dadurch gekennzeichnet, dass** der Massivkäfig (1) wälzkörpergeführt oder innenringgeführt ist.

10. Pendelrollenlager nach einem der vorhergehenden Ansprüche, **gekennzeichnet durch** einen Mittelbord, welcher als separates Bauteil oder als Anformung an dem Innenring ausgebildet ist.

11. Pendelrollenlager nach einem der vorhergehenden Ansprüche, **dadurch gekennzeichnet, dass** der Innenring beidseitig einen in Umlaufrichtung durchgängigen Außenbord aufweist.

12. Pendelrollenlager nach einem der vorhergehenden Ansprüche, **dadurch gekennzeichnet, dass** das Pendelrollenlager als ein Großlager mit einem Außendurchmesser mit mehr als 300 mm, vorzugsweise mit mehr als 500 mm und insbesondere mit mehr als 1000 mm ausgebildet ist.

13. Verfahren zum Einbau der Rollen in das Pendelrollenlager nach einem der vorhergehenden Ansprüche, **dadurch gekennzeichnet, dass** in einem Schritt der Massivkäfig (1) auf den Innenring gesetzt wird und in einem späteren Schritt die Rollen in die Aufnahmeabschnitte (4) eingesetzt werden, wobei während des Einsetzens der Rollen der Mittelring (2) elastisch verformt wird.

## Claims

1. Spherical roller bearing
having an outer ring,
having an inner ring,
having a plurality of rollers which are arranged so as to roll in at least two rows between the inner ring and the outer ring such that the outer ring and the inner ring are mounted so as to be rotatable relative to one another about an axis of rotation,
and having a solid cage (1), the solid cage (1) having a central ring (2), on both sides of which are arranged axially directed webs (3) which form receiving portions (4) for the rollers,
the central ring (2) having weakening regions (6, 7, 8, 9),
**characterized in that**
the weakening regions (6, 7, 9) are formed so as to permit and/or assist elastic deflection of the webs (3) during an installation of the rollers,
the weakening regions being formed as encircling grooves (6, 7, 9) which are formed on the radial outer side and on the radial inner side of the central ring (2) of the solid cage (1).

2. Spherical roller bearing according to Claim 1, **characterized in that** weakening regions (8) in the form of cross-sectional reductions provided in sections in the direction of rotation are additionally formed on the central ring (2).

3. Spherical roller bearing according to one of the preceding claims, **characterized in that** the groove (6, 7, 9) has a rectangular or semi-circular cross section.

4. Spherical roller bearing according to one of the preceding claims, **characterized in that** at least one weakening region, in particular the groove (6, 7, 9), is arranged spaced apart from the adjacent ring, in particular outer ring.

5. Spherical roller bearing according to one of the preceding claims, **characterized in that** at least one weakening region (6, 7, 8, 9), in particular a groove (6, 7, 9), adjoins a region of the ring which is closed in the direction of rotation.

6. Spherical roller bearing according to one of the preceding claims, **characterized in that** the central ring (2) has axially aligned passages (8), in particular bores, as additional weakening regions.

7. Spherical roller bearing according to one of the preceding claims, **characterized in that** the solid cage (1) is formed in one piece.

8. Spherical roller bearing according to one of the preceding claims, **characterized in that** the receiving portions (4) and/or the webs (3) on both sides of the central ring (2) are arranged offset with respect to one another in the direction of rotation.

9. Spherical roller bearing according to one of the preceding claims, **characterized in that** the solid cage (1) is guided via the rolling bodies or via the inner ring.

10. Spherical roller bearing according to one of the preceding claims, **characterized by** a central rim which is formed as a separate component or as an integrally formed portion on the inner ring.

11. Spherical roller bearing according to one of the preceding claims, **characterized in that** the inner ring has, on both sides, an outer rim which is continuous in the direction of rotation.

12. Spherical roller bearing according to one of the preceding claims, **characterized in that** the spherical roller bearing is formed as a large bearing with an outer diameter of greater than 300 mm, preferably of greater than 500 mm and in particular of greater than 1000 mm.

13. Method for installing the rollers into the spherical roller bearing according to one of the preceding claims, **characterized in that**, in one step, the solid cage (1) is placed onto the inner ring, and in a subsequent step, the rollers are inserted into the receiving portions (4), the central ring (2) being elastically deformed during the insertion of the rollers.

## Revendications

1. Roulement à rotule sur rouleaux, comprenant
une bague extérieure,
une bague intérieure,
une pluralité de rouleaux qui sont disposés roulants sur au moins deux rangées entre la bague intérieure et la bague extérieure, de telle sorte que la bague extérieure et la bague intérieure soient montées rotatives l'une par rapport à l'autre autour d'un axe de rotation,
et une cage massive (1), la cage massive (1) comprenant une bague centrale (2) sur laquelle sont disposées des deux côtés des nervures (3) orientées axialement qui forment des sections de logement (4) pour les rouleaux,
la bague centrale (2) comprenant des régions d'affaiblissement (6, 7, 8, 9),
**caractérisé en ce que**
les régions d'affaiblissement (6, 7, 9) sont réalisées pour permettre et/ou assister une flexion élastique des nervures (3) lors d'un montage des rouleaux,
les régions d'affaiblissement étant réalisées en tant que rainures périphériques (6, 7, 9) qui sont ménagées sur le côté extérieur radial et sur le côté intérieur radial de la bague centrale (2) de la cage massive (1).

2. Roulement à rotule sur rouleaux selon la revendication 1, **caractérisé en ce qu'**en outre des régions d'affaiblissement (8) sont réalisées sur la bague centrale (2) en tant que réductions de section transversale présentes par sections dans la direction périphérique.

3. Roulement à rotule sur rouleaux selon l'une quelconque des revendications précédentes, **caractérisé en ce que** la rainure (6, 7, 9) possède une section transversale rectangulaire ou semi-circulaire.

4. Roulement à rotule sur rouleaux selon l'une quelconque des revendications précédentes, **caractérisé en ce qu'**au moins une région d'affaiblissement, en particulier la rainure (6, 7, 9), est disposée à distance de la bague voisine, en particulier de la bague extérieure.

5. Roulement à rotule sur rouleaux selon l'une quelconque des revendications précédentes, **caractérisé en ce qu'**au moins une région d'affaiblissement (6, 7, 8, 9), en particulier une rainure (6, 7, 9), est adjacente à une région, fermée dans la direction périphérique, de la bague.

6. Roulement à rotule sur rouleaux selon l'une quelconque des revendications précédentes, **caractérisé en ce que** la bague centrale (2) comprend des passages (8) orientés axialement, en particulier des alésages, en tant que régions d'affaiblissement supplémentaires.

7. Roulement à rotule sur rouleaux selon l'une quelconque des revendications précédentes, **caractérisé en ce que** la cage massive (1) est réalisée d'une seule pièce.

8. Roulement à rotule sur rouleaux selon l'une quelconque des revendications précédentes, **caractérisé en ce que** les sections de logement (4) et/ou les nervures (3) sont disposées des deux côtés de la bague centrale (2), de manière décalée les unes par rapport aux autres dans la direction périphérique.

9. Roulement à rotule sur rouleaux selon l'une quelconque des revendications précédentes, **caractérisé en ce que** la cage massive (1) est guidée par les corps de roulement ou est guidée par la bague intérieure.

10. Roulement à rotule sur rouleaux selon l'une quelconque des revendications précédentes, **caractérisé par** un bord central qui est réalisé en tant que partie structurale séparée ou en tant que partie façonnée sur la bague intérieure.

11. Roulement à rotule sur rouleaux selon l'une quelconque des revendications précédentes, **caractérisé en ce que** la bague intérieure comprend des deux côtés un bord extérieur continu dans la direction périphérique.

12. Roulement à rotule sur rouleaux selon l'une quelconque des revendications précédentes, **caractérisé en ce que** le roulement à rotule sur rouleaux est réalisé en tant que grand palier doté d'un diamètre extérieur de plus de 300 mm, de préférence de plus de 500 mm et en particulier de plus de 1000 mm.

13. Procédé de montage des rouleaux dans le roulement à rotule sur rouleaux selon l'une quelconque des revendications précédentes, **caractérisé en ce que**, dans une étape, la cage massive (1) est placée sur la bague intérieure, et dans une étape ultérieure, les rouleaux sont insérés dans les sections de logement (4), la bague centrale (2) étant déformée élastiquement lors de l'insertion des rouleaux.
